(19) **Europäisches Patentamt / European Patent Office / Office européen des brevets**

(11) **EP 3 777 367 B1**

(12) **FASCICULE DE BREVET EUROPEEN**

(45) Date de publication et mention de la délivrance du brevet:
**27.07.2022 Bulletin 2022/30**

(21) Numéro de dépôt: **19716896.6**

(22) Date de dépôt: **11.04.2019**

(51) Classification Internationale des Brevets (IPC):
**H04W 56/00** *(2009.01)* **H04B 17/21** *(2015.01)*

(52) Classification Coopérative des Brevets (CPC):
**H04W 56/0065; H04B 17/21; H04W 56/0085**

(86) Numéro de dépôt international:
**PCT/EP2019/059326**

(87) Numéro de publication internationale:
**WO 2019/197566 (17.10.2019 Gazette 2019/42)**

(54) **PROCÉDÉ ET SYSTÈME D'ÉTALONNAGE DE DÉCALAGE TEMPOREL ENTRE VOIES D'UN SYSTÈME DE RÉCEPTION MULTIVOIES DE SIGNAUX RADIOÉLECTRIQUES**

VERFAHREN UND SYSTEM ZUR KALIBRIERUNG DER ZEITVERSCHIEBUNG ZWISCHEN DEN PFADEN EINES SYSTEMS ZUM MEHRWEGEEMPFANG RADIOELEKTRISCHER SIGNALE

METHOD AND SYSTEM FOR CALIBRATING TIME SHIFT BETWEEN PATHWAYS OF A SYSTEM FOR MULTIPATHWAY RECEPTION OF RADIOELECTRIC SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2018 FR 1800298**

(43) Date de publication de la demande:
**17.02.2021 Bulletin 2021/07**

(73) Titulaire: **THALES**
**92400 Courbevoie (FR)**

(72) Inventeur: **BRIAND, Thierry**
**78551 Elancourt (FR)**

(74) Mandataire: **Lavoix**
**2, place d'Estienne d'Orves**
**75441 Paris Cedex 09 (FR)**

(56) Documents cités:
**EP-A1- 2 299 774 EP-A1- 2 911 323**
**US-A1- 2010 164 782 US-A1- 2015 255 868**

**Description**

La présente invention concerne un procédé d'étalonnage de décalage temporel entre voies d'un système de réception multivoies de signaux radioélectriques, et un système d'étalonnage de décalage temporel associé. Elle concerne également un procédé de synchronisation entre voies d'un système de réception multivoies de signaux radioélectriques, et un système de synchronisation associé.

L'invention se situe dans le domaine général des systèmes de réception multivoies de signaux radioélectriques, utilisés dans de nombreux domaines tels que la goniométrie d'amplitude, l'interférométrie, les systèmes radar à synthèse d'ouverture multistatique, des mesures de fréquence et l'imagerie médicale.

De manière connue, dans un système de réception multivoies, chaque voie de réception comprend une chaîne de réception délivrant un signal électrique en entrée d'un convertisseur analogique numérique ayant une fréquence d'échantillonnage associée, et un module d'interfaçage branché en sortie dudit convertisseur analogique numérique et adapté à fournir les échantillons de signal numérisé en entrée d'un module de traitement numérique du signal par paquets d'échantillons, c'est-à-dire avec un minimum de parallélisation. Cela tient au fait qu'un module de traitement numérique du signal comporte un ou plusieurs composants numériques programmables de type FPGA (*Field Programmable Gate Array*) dont la fréquence de travail est bien inférieure à la fréquence d'échantillonnage de la conversion analogique numérique.

En particulier pour des applications qui exploitent le déphasage entre voies de réception, par exemple pour l'interférométrie, il est nécessaire que les échantillons issus de chaque voie portent sur la même tranche temporelle des signaux radioélectriques captés en entrée des voies de réception, ou, en d'autres termes, que les paquets d'échantillons soient synchronisés entre voies de réception. De plus, il est nécessaire que la synchronisation entre voies de réception soit stable et reproductible.

Il existe diverses causes possibles de désynchronisation entre voies de réception.

Le document EP 2299774 A1 décrit une antenne active comprenant une matrice de dipôles et un procédé de mise à jour de phase et d'amplitude de signaux transmis ou reçus, par utilisation de signaux d'étalonnage et de canaux d'étalonnage de transmission et de réception.

Le document US 2010/164782 A1 décrit une méthode d'étalonnage pour un système de transmission/réception radio par satellite.

Dans un premier cas de figure, toutes les voies de réception comportent un convertisseur analogique numérique fonctionnant à une fréquence d'échantillonnage Fe. Il s'agit du cas des chaînes de réception respectant la condition de Shannon, effectuant un filtrage de largeur de bande inférieure à Fe/2 avant la conversion numérique-analogique. La fréquence Fe est très élevée et bien supérieure à la fréquence maximum de fonctionnement des composants numériques programmables. On utilise des modules d'interfaçage, par exemple des démultiplexeurs pouvant comporter un ou plusieurs étages de démultiplexage, qui fournissent des paquets de P échantillons en parallèle, P étant un nombre entier non nul, à la fréquence Fe/P. Tout éventuel décalage temporel des démultiplexeurs, par exemple lors du démarrage, induit un décalage possible entre échantillons dans les paquets d'échantillons et les sorties des diverses voies de réception ne sont plus synchrones.

Dans ce cas de figure, on connaît dans l'état de la technique des méthodes de synchronisation basées sur l'utilisation d'architectures particulières permettant une distribution de signaux de synchronisation, ayant pour objectif d'effectuer une synchronisation des démultiplexeurs. Des architectures de distribution de signaux de synchronisation en série ou en étoile ont été proposées. De telles solutions sont complexes, et la synchronisation obtenue dépend de la synchronisation d'horloges. La fréquence d'échantillonnage Fe étant très élevée, la période correspondante est très faible, et les temps de propagation et leur dérive ne sont pas négligeables devant cette période. Les systèmes de synchronisation ainsi obtenus peuvent donc devenir instables.

Dans un autre cas de figure, les chaînes de réception ne respectent pas la condition de Shannon, effectuant un filtrage de très large bande instantanée, et les convertisseurs analogique-numérique utilisent des fréquences d'échantillonnage $Fe_i$ différentes pour résoudre la problématique de repliement de spectre due au non respect de la condition de Shannon. La synchronisation entre voies de réception à base de signaux de synchronisation n'est pas possible dans ce cas.

L'invention a pour objectif de remédier aux inconvénients de l'art antérieur, en proposant un procédé et système moins complexe, permettant d'obtenir une synchronisation temporelle robuste et reproductible, et fonctionnant également lorsque les fréquences d'échantillonnage des convertisseurs analogiques numériques du système de réception multivoies sont différentes.

A cet effet, l'invention propose un procédé d'étalonnage de décalage temporel entre voies d'un système de réception multivoies de signaux radioélectriques, le système comportant un ensemble de voies de réception de signaux radioélectriques, chaque voie de réception comportant une chaîne de réception délivrant un signal électrique en entrée d'un convertisseur analogique numérique ayant une fréquence d'échantillonnage associée, et un module d'interfaçage branché en sortie dudit convertisseur analogique numérique et adapté à fournir des ensembles d'échantillons de signal numérisé en entrée d'un module de traitement numérique de signal comportant un ou plusieurs composants numériques programmables. Ce procédé comporte suite à une mise sous tension du système de réception :

- une injection sur toutes les voies de réception d'un même signal aléatoire représentant un bruit obtenu à partir d'une source de bruit,
- pour au moins une paire de voies de réception comportant une première voie et une deuxième voie, une estimation d'un décalage temporel entre échantillons de signal numérisés fournis par lesdites première et deuxième voies, en utilisant un calcul d'une fonction d'intercorrélation entre un premier ensemble d'échantillons obtenus par la première voie de réception et un deuxième ensemble d'échantillons obtenus par la deuxième voie de réception,
- une mémorisation du décalage temporel estimé en association avec ladite paire de voies.

Avantageusement, le procédé de l'invention permet d'estimer un décalage temporel entre voies de réception sans fourniture d'un signal de synchronisation à la fréquence d'échantillonnage entre voies de réception lors d'une mise sous tension du système de réception multivoies. Ainsi, l'architecture du système est simplifiée.

Le procédé d'étalonnage de décalage temporel entre voies d'un système de réception multivoies de signaux radioélectriques selon l'invention peut également présenter une ou plusieurs des caractéristiques ci-dessous, prises indépendamment ou en combinaison.

Le signal aléatoire représentant un bruit injecté est un bruit analogique thermique injecté en entrée de chaque chaîne de réception.

Le signal aléatoire représentant un bruit injecté est un bruit analogique obtenu à partir d'une séquence numérique pseudo-aléatoire et injecté en entrée du convertisseur analogique-numérique de chaque voie de réception.

L'estimation dudit décalage temporel comporte une détection d'un maximum de ladite fonction d'intercorrélation, ledit décalage temporel étant un décalage temporel numérique fonction d'un indice temporel correspondant audit maximum.

Le procédé est mis en œuvre dans un système de réception multivoies dans lequel chaque convertisseur analogique numérique a une même fréquence d'échantillonnage, et le calcul d'une fonction d'intercorrélation comporte des étapes de :

- acquisition d'un premier ensemble d'échantillons sur ladite première voie de réception et d'un deuxième ensemble de même nombre d'échantillons sur ladite deuxième voie de réception ;
- application d'une transformation de Fourier discrète sur ledit premier ensemble d'échantillons, permettant d'obtenir un premier ensemble de valeurs complexes d'échantillons transformés, et application d'une transformation de Fourier discrète sur ledit deuxième ensemble d'échantillons, permettant d'obtenir un deuxième ensemble de valeurs complexes d'échantillons transformés,
- calcul du produit complexe entre le premier ensemble de valeurs complexes et le complexe conjugué du deuxième ensemble de valeurs complexes,
- obtention de ladite fonction d'intercorrélation par application d'une transformation de Fourier discrète inverse audit produit complexe.

Le procédé est mis en œuvre dans un système de réception multivoies dans lequel chaque convertisseur analogique numérique a une fréquence d'échantillonnage propre associée, et le calcul d'une fonction d'intercorrélation comporte des étapes de :

- acquisition d'un premier ensemble d'un premier nombre $M_1$ d'échantillons sur ladite première voie de réception pendant une durée prédéterminée, et acquisition d'un deuxième ensemble d'un deuxième nombre $M_2$ d'échantillons, différent du premier nombre, sur ladite deuxième voie de réception, pendant ladite durée prédéterminée,
- application d'une transformation de Fourier discrète sur ledit premier ensemble d'échantillons, permettant d'obtenir un premier ensemble de $M_1$ valeurs complexes d'échantillons transformés, et application d'une transformation de Fourier discrète sur ledit deuxième ensemble d'échantillons, permettant d'obtenir un deuxième ensemble de $M_2$ valeurs complexes d'échantillons transformés,
- obtention de deux ensembles de valeurs complexes de même cardinal par suppression des valeurs complexes associées aux fréquences les plus élevées dans l'ensemble de plus grand cardinal,
- calcul du produit complexe entre le premier ensemble de valeurs complexes et le complexe conjugué du deuxième ensemble de valeurs complexes de même cardinal,
- obtention de ladite fonction d'intercorrélation par application d'une transformation de Fourier discrète inverse audit produit.

Le procédé est appliqué dans un système de réception multivoies comportant un nombre N de voies de réception supérieur ou égal à 2, comportant une sélection d'une voie de réception de référence, et l'estimation d'un décalage temporel pour chaque paire de voies composée de ladite voie de réception de référence et d'une deuxième voie parmi les N-1 autres voies de réception.

Selon un autre aspect, l'invention concerne un système d'étalonnage de décalage temporel entre voies d'un système de réception multivoies tel que brièvement décrit ci-dessus. Ce système d'étalonnage comporte :

- une source de bruit adaptée à injecter un même signal aléatoire représentant un bruit sur toutes les voies de réception,
- un module de calcul adapté à estimer, pour au moins une paire de voies de réception comportant une première voie et une deuxième voie, un décalage temporel entre échantillons de signal numérisés fournis par lesdites première et deuxième voies, en utilisant un calcul d'une fonction d'intercorrélation entre un premier ensemble d'échantillons obtenus par la première voie de réception et un deuxième ensemble d'échantillons obtenus par la deuxième voie de réception,
- une mémoire adaptée à mémoriser le décalage temporel estimé en association avec ladite paire de voies.

Selon un autre aspect, l'invention concerne un procédé de synchronisation entre voies de réception d'un système de réception multivoies de signaux radioélectriques comportant un ensemble de voies de réception de signaux radioélectriques, chaque voie de réception comportant une chaîne de réception délivrant un signal électrique en entrée d'un convertisseur analogique numérique ayant une fréquence d'échantillonnage associée, et un module d'interfaçage branché en sortie dudit convertisseur analogique-numérique et adapté à fournir des ensembles d'échantillons de signal numérisé en entrée d'un module de traitement numérique de signal comportant un ou plusieurs composants numériques programmables.

Ce procédé de synchronisation comporte, pour au moins une paire de voies de réception :

- une phase d'étalonnage de décalage temporel mettant en œuvre un procédé d'étalonnage tel que brièvement décrit ci-dessus, et
- une phase d'application d'une compensation du décalage temporel estimé en sortie du module d'interfaçage d'au moins une des voies de ladite paire de voies par rapport à une voie de référence, de manière à fournir des séries d'échantillons numériques synchronisés en entrée du module de traitement numérique du signal, chaque série d'échantillons numériques synchronisés comportant un nombre d'échantillons correspondant à une même durée et chaque premier échantillon de chaque série correspondant temporellement à un même instant.

Selon un autre aspect, l'invention concerne un système de synchronisation entre voies de réception d'un système de réception multivoies de signaux radioélectriques, le système de réception comportant un ensemble de voies de réception de signaux radioélectriques, chaque voie de réception comportant une chaîne de réception délivrant un signal électrique en entrée d'un convertisseur analogique-numérique ayant une fréquence d'échantillonnage associée, et un module d'interfaçage branché en sortie dudit convertisseur analogique numérique et adapté à fournir des ensembles d'échantillons de signal numérisé en entrée d'un module de traitement numérique de signal comportant un ou plusieurs composants numériques programmables. Ce système de synchronisation comporte un système d'étalonnage de décalage temporel tel que brièvement décrit ci-dessus, mis en œuvre dans une phase d'étalonnage de décalage temporel pour au moins une paire de voies de réception, et chaque voie de réception comporte un module de compensation de décalage temporel, branché en sortie d'un module d'interfaçage correspondant, le module de compensation de décalage temporel d'une voie étant adapté à compenser le décalage temporel estimé par rapport à une voie de référence, de manière à fournir des séries d'échantillons numériques synchronisés en entrée du module de traitement numérique du signal, chaque série d'échantillons numériques synchronisés comportant un nombre d'échantillons correspondant à une même durée et chaque premier échantillon de chaque série correspondant temporellement à un même instant.

D'autres caractéristiques et avantages de l'invention ressortiront de la description qui en est donnée ci-dessous, à titre indicatif et nullement limitatif, en référence aux figures annexées, parmi lesquelles :

- la figure 1 illustre schématiquement un système de synchronisation entre voies de réception d'un système de réception multivoies selon un premier mode de réalisation ;
- la figure 2 illustre schématiquement un système de synchronisation entre voies de réception d'un système de réception multivoies selon un deuxième mode de réalisation;
- la figure 3 est un schéma synoptique d'un procédé d'étalonnage de décalage temporel entre voies selon mode de réalisation adapté au cas où les convertisseurs analogiques numériques sont cadencés à une même fréquence Fe ;
- la figure 4 est un schéma synoptique des principales étapes d'un procédé de synchronisation de voies selon mode de réalisation adapté au cas où les convertisseurs analogiques numériques sont cadencés à différentes fréquences d'échantillonnage $Fe_i$ ;
- la figure 5 illustre schématiquement deux ensembles d'échantillons temporels acquis sur une période temporelle donnée ;
- la figure 6 est un schéma synoptique des principales étapes d'un mode de réalisation d'un procédé de synchronisation entre voies de réception ;
- la figure 7 illustre en détail un mode de réalisation d'un dispositif de synchronisation pour une voie de réception ;
- la figure 8 représente schématiquement des paquets d'échantillons issus d'un dispositif d'interfaçage d'une voie de réception ;
- les figures 9 et 10 représentent schématiquement un exemple de paquets d'échantillons issus de deux voies de réception, avant et après application de la synchronisation ;
- la figure 11 illustre schématiquement des premiers et deuxièmes paquets d'échantillons utilisés pour obtenir une série d'échantillons selon un mode de réalisation ;
- les figures 12 et 13 illustrent, dans un exemple, des paquets d'échantillons issus des premier et deuxième ensembles de registres du dispositif de synchronisation, et des séries synchronisées obtenues, et
- la figure 14 est un synoptique des principales étapes d'un procédé de synchronisation selon un mode de réalisation.

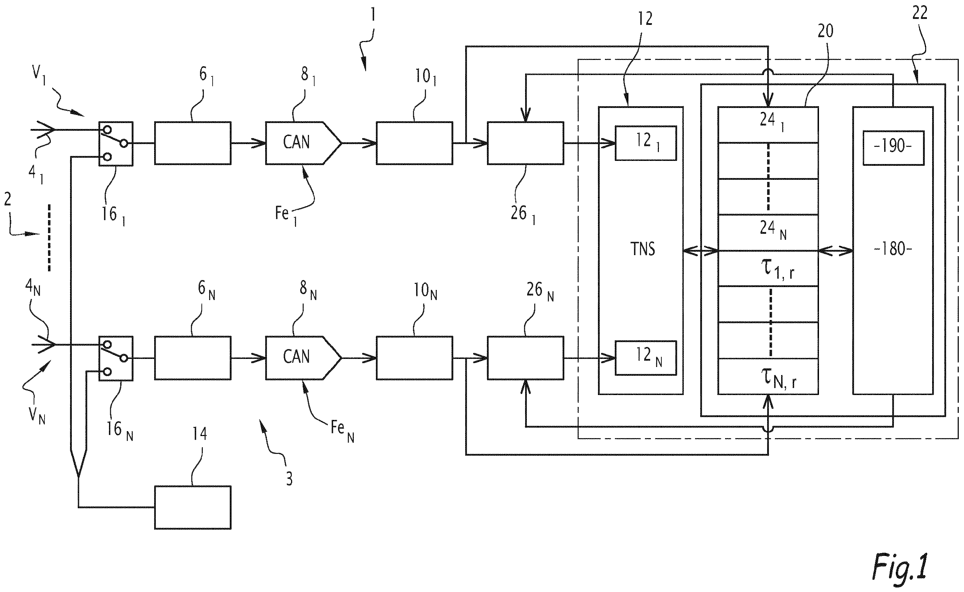

La figure 1 illustre schématiquement un système de synchronisation 1 de voies de réception d'un système de réception multivoies 2 de signaux radioélectriques.

Le système de réception multivoies 2 de signaux radioélectriques comprend N voies de réception $V_1$ à $V_N$, l'une quelconque des voies de réception étant référencée ci-après $V_i$, avec i compris entre 1 et N.

Chacune des voies de réception $V_1$,..., $V_N$ comprend une antenne $4_1$,..., $4_N$, recevant un signal radioélectrique et délivrant un signal électrique à une chaîne de réception (CR) 61 à 6N.

Chaque chaîne de réception délivre un signal électrique en entrée d'un convertisseur analogique numérique ou CAN $8_1$ à $8_N$ ayant une fréquence d'échantillonnage associée.

Chaque CAN $8_i$ fournit des échantillons numériques en sortie, à une cadence dictée par la fréquence d'échantillonnage $Fe_i$, égale à une même fréquence Fe dans un mode de réalisation. Ces échantillons sont fournis à un module d'interfaçage $10_i$ correspondant. Ce module d'interfaçage a pour fonction d'assurer la compatibilité avec un module de traitement numérique de signal $12_i$ associé à la voie de réception et faisant partie d'un module de traitement numérique de signal 12, comportant un ou plusieurs composants numériques programmables de type FPGA, lorsque la fréquence Fe est bien supérieure à la fréquence maximale de fonctionnement du ou des composants numériques programmables.

Dans un mode de réalisation, chaque module d'interfaçage $10_1$,..., $10_N$ est un démultiplexeur à un ou plusieurs étages de démultiplexage, fournissant des paquets de P échantillons en parallèle, P étant un nombre entier non nul, à la fréquence Fe/P.

Dans un mode de réalisation alternatif, les modules d'interfaçage $10_1$ à $10_N$ sont constitués de liens série rapides.

Deux types de systèmes de réception multivoies sont envisagés.

Un premier type de système de réception est un système respectant la condition de Shannon, les chaînes de réception réalisant un filtrage de largeur de bande inférieure à Fe/2, chacun des CAN $8_1$ à $8_N$ fonctionnant avec une même fréquence d'échantillonnage Fe. Dans les systèmes de réception de premier type, toutes les voies de réception $V_1$ à $V_N$ fournissent chacune un même nombre d'échantillons numériques pour une même durée d'acquisition de signal.

Un deuxième type de système de réception est un système ne respectant pas la condition de Shannon, les chaînes de réception réalisant un filtrage de largeur de bande supérieure à $Fe_i/2$, où $Fe_i$ est la fréquence d'échantillonnage du CAN $8_i$. La réalisation d'une synchronisation pour un système de réception de deuxième type est bien plus complexe que dans le cas d'un système de réception du premier type. Dans les systèmes de réception de deuxième type, toutes les voies de réception $V_1$ à $V_N$ fournissent des nombres d'échantillons numériques différents pour une même durée d'acquisition de signal.

Le système de synchronisation 1 de la figure 1 est adapté pour les systèmes de réception de premier type.

Le système de synchronisation 1 enrichit le système de réception multivoies 2 avec un système d'étalonnage de décalage temporel 3 pour réaliser l'estimation de décalages temporels entre les voies de réception et des modules de compensation de décalage temporel pour la synchronisation des voies de réception.

Le système d'étalonnage de décalages temporels 3 du système de synchronisation 1 comporte en plus une source de signal aléatoire représentant un bruit 14, branchée en entrée de modules de commutation $16_1$ à $16_N$.

Dans le mode de réalisation de la figure 1, chaque module de commutation $16_1$ à $16_N$ est branché en entrée d'une chaîne de réception correspondante $6_1$ à $6_N$, et reçoit sur une première entrée, la sortie de l'antenne $4_1$ à $4_N$ de la voie de réception $V_1$ à $V_N$ correspondante, et sur une deuxième entrée, le bruit issu de la source signal aléatoire représentant un bruit 14.

Chaque module de commutation $16_1$ à $16_N$ est adapté à commuter entre une première position reliée à la première entrée et une deuxième position reliée à la deuxième entrée, pour transmettre soit le signal électrique délivré par l'antenne correspondante, soit le bruit issu de la source 14, en entrée du convertisseur CAN $8_1$ à $8_N$ correspondant.

Dans une phase d'étalonnage de décalage temporel, mise en œuvre lors de la mise sous tension du système, et avant une phase de traitement des signaux radioélectriques reçus, tous les modules de commutation $16_1$ à $16_N$ sont en deuxième position.

Dans une phase de fonctionnement opérationnel, tous les modules de commutation $16_1$ à $16_N$ sont en première position.

La source de signal aléatoire représentant un bruit 14 est par exemple une source analogique de bruit thermique.

La sortie de la source 14 est branchée en entrée de chaque module de commutation $16_1$ à $16_N$, de préférence en respectant une longueur de câble sensiblement identique pour chaque liaison, les câbles étant de même type, de manière à présenter le même bruit sans décalage temporel en entrée de chaque CAN $8_1$ à $8_N$. Ainsi un même bruit, de même durée et sans décalage temporel est fourni en entrée de chaque CAN.

Le système 1 comprend en outre un processeur 180 et une mémoire 20, qui sont, dans un mode de réalisation, intégrés dans un module de calcul 22 qui comprend également le ou les modules de traitement numérique de signal 12.

Le processeur 180 est adapté à mettre en œuvre des instructions de code logiciel lorsqu'il est mis sous tension, permettant de réaliser des étapes du procédé d'étalonnage de décalage temporel selon l'invention.

En phase d'étalonnage, le processeur 180 met en œuvre un module 190 d'étalonnage de décalage temporel entre échantillons de signal numérisé fournis par une première voie de réception $V_1$ et une deuxième voie de réception $V_2$ qui sont distinctes, adapté à calculer un décalage temporel entre voies en utilisant un calcul d'une fonction d'intercorrélation, comme expliqué en détail ci-après.

Le module 190 d'étalonnage de décalage temporel entre voies est par exemple mis en œuvre par des instructions de code logiciel. En variante, le module 190 est réalisé sous forme d'un composant logique programmable tel qu'un FPGA, ou encore sous forme de circuit intégré dédié tel qu'un ASIC (pour *Application Specific Integrated Circuit).*

Les ensembles d'échantillons de signal numérisés $24_1...24_N$ sont mémorisés dans la mémoire 20. Chaque ensemble d'échantillons $24_1...24_N$ comprend un nombre d'échantillons successifs correspondant à une même tranche de temps $T_0$.

Le calcul de décalage temporel est de préférence effectué pour autant de paires de voies que nécessaire pour réaliser un étalonnage de décalage temporel $\tau_{i,r}$ pour chacune des voies de réception $V_i$ par rapport à une voie de référence $V_r$, comme expliqué plus en détail ci-après.

Le processeur 180 est adapté à commander des modules de compensation de décalage temporel $26_1$ à $26_N$, pour réaliser le décalage temporel en phase opérationnelle, de la valeur de décalage temporel $\tau_{1,r}$ à $\tau_{N,r}$ préalablement calculé et mémorisé pour chacune des voies de réception $V_1$ à $V_N$.

Avantageusement, le système de l'invention permet de réaliser une synchronisation sans fourniture d'un signal de synchronisation entre voies de réception lors d'une mise sous tension du système.

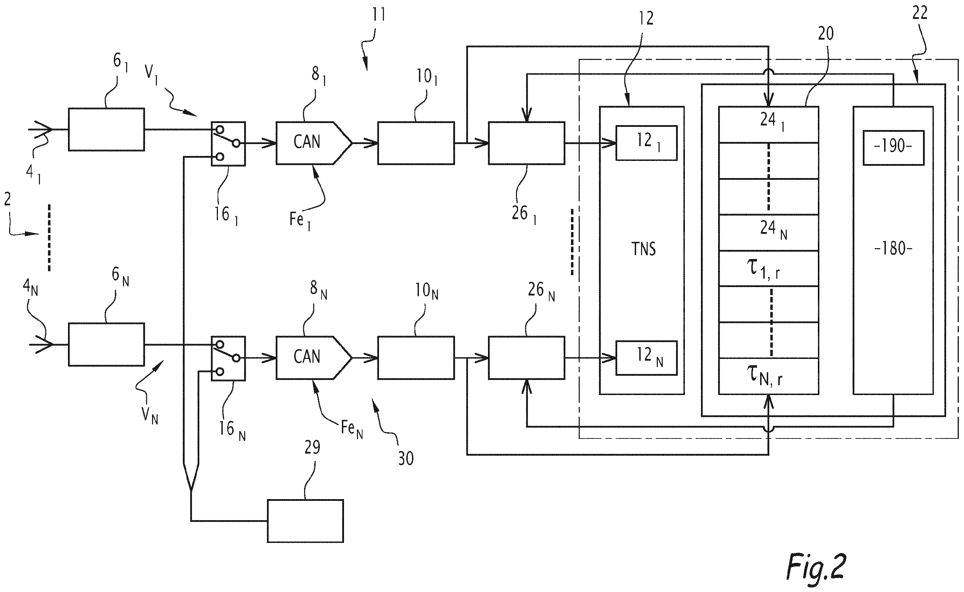

La figure 2 illustre schématiquement un deuxième mode de réalisation d'un système de synchronisation 11 de système de réception multivoies.

Les références communes avec les éléments de la figure 1 sont conservées. Le système de réception multivoies est analogue à celui décrit en référence à la figure 1.

La principale différence avec le premier mode de réalisation est que le système d'étalonnage de décalage temporel 30 comporte une source de signal aléatoire représentatif d'un bruit 29 branchée de manière à fournir un bruit analogique en entrée de chaque CAN 81 à 8N.

Dans ce mode de réalisation les modules de commutation $16_1$ à $16_N$ sont insérés entre la sortie de la chaîne de réception $6_1$ à $6_N$ et l'entrée du CAN $8_1$ à $8_N$ correspondant pour chaque voie de réception $V_1$ à $V_N$.

En phase d'étalonnage, les modules de commutation $16_i$ sont en deuxième position reliant la deuxième entrée de chaque module, branchée à la source de signal aléatoire représentatif d'un bruit 29, à l'entrée du CAN $8_i$ correspondant.

Dans ce mode de réalisation, la source de bruit 29 est par exemple réalisée par un générateur pseudo-aléatoire utilisant par exemple des registres à décalage et un rebouclage par « ou exclusif », ou bien avec un bloc mémoire contenant une séquence numérique pseudo-aléatoire. Dans les deux cas, le signal numérique est transformé en signal analogique par un dispositif d'interfaçage numérique-analogique. Le signal analogique issu de telles sources 29 a des caractéristiques de bruit blanc, à fonction d'autocorrélation de type Dirac.

De préférence, la fréquence d'horloge de la séquence pseudo-aléatoire est égale à la fréquence d'échantillonnage Fe lorsque le système de réception 2 est un système de premier type.

Lorsque le système de réception 2 est un système de deuxième type, la fréquence d'horloge de la séquence pseudo-aléatoire est par exemple choisie égale à la plus petite fréquence d'échantillonnage $Fe_i$.

Comme dans le mode de réalisation de la figure 1, le branchement de la source de bruit 29 en entrée des CAN $8_i$ est effectué de manière à s'assurer de l'absence de décalage temporel entre les bruits injectés en entrées des CAN $8_i$ des différentes voies de réception.

Le système d'étalonnage de décalage temporel 30 et le système de synchronisation 11 sont adaptés à fonctionner à la fois avec un système de réception multivoies de premier type et avec un système de réception multivoies de deuxième type.

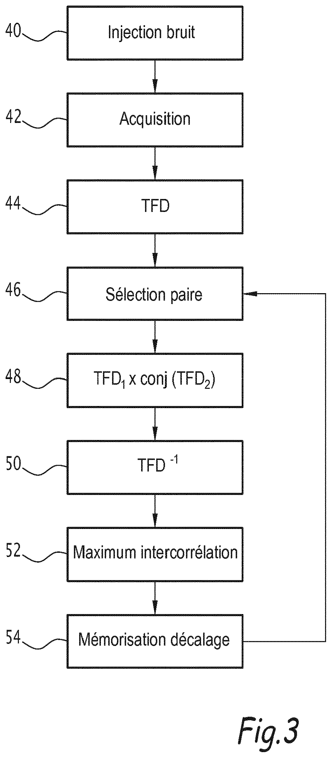

La figure 3 est un schéma synoptique des principales étapes d'un procédé d'étalonnage de décalage temporel entre voies de réception mis en œuvre avec un système de réception multivoies de premier type.

Comme expliqué ci-dessus, dans un système de réception multivoies de premier type, tous les convertisseurs analogique-numérique $8_i$ utilisent une même fréquence d'échantillonnage Fe.

Les étapes de calcul de ce procédé sont mises en œuvre par le module de calcul 22, par exemple en partie par un module de traitement numérique de signal de type FPGA, et en partie par un module d'instructions de code logiciel implémentées dans un processeur 180.

Le procédé d'étalonnage est mis en œuvre dans une phase d'étalonnage de décalage temporel lors de la mise sous tension du système, avant son utilisation opérationnelle.

Lors d'une première étape le procédé comprend la commande 40 de l'injection d'un bruit analogique, soit en entrée de la chaîne de réception correspondante selon le mode de réalisation de la figure 1, soit en entrée du convertisseur analogique-numérique correspondant selon le mode de réalisation de la figure 2.

Lors d'une première étape d'acquisition 42 est effectuée l'acquisition synchrone d'un ou plusieurs premiers ensembles d'échantillons numériques en sortie des modules d'interfaçage $10_1$ à $10_N$. Le nombre d'échantillons est par exemple M=4096.

A l'étape 44, par application d'une transformation de Fourier discrète (TFD), on obtient, pour chaque ensemble d'échantillons acquis, un ensemble de M valeurs complexes d'échantillons transformés.

De préférence le nombre M d'échantillons est de la forme $M=2^q$, et une TFD optimisée est appliquée par un composant numérique programmable FPGA 12. De préférence, les TFD appliquées en mode opérationnel sont utilisées.

De préférence, les étapes d'acquisition 42 et d'application d'une TFD 44 sont appliquées simultanément pour toutes les voies de réception.

Le procédé comprend ensuite une étape 46 de sélection d'une première voie de réception $V_1$ et d'une deuxième voie de réception $V_2$, formant une paire de voies de réception $(V_1, V_2)$ à traiter. Lorsque N=2, le système comporte une seule paire de voies qui forme la paire de voies à traiter.

Optionnellement, une voie de réception donnée est choisie comme voie de référence, qui est réutilisée dans chaque paire de voies à traiter.

Pour la première voie de réception $V_1$ on a obtenu et mémorisé un premier ensemble $TFD_1$ de M valeurs complexes d'échantillons transformés, notées $TFD_{1,1}$ à $TFD_{1,M}$.

Pour la deuxième voie de réception $V_2$ on a obtenu et mémorisé un deuxième ensemble $TFD_2$ de M valeurs complexes d'échantillons transformés, notées $TFD_{2,1}$ à $TFD_{2,M}$.

Le procédé comprend ensuite un calcul 48 du produit complexe entre le premier ensemble $TFD_1$ de valeurs complexes $\{TFD_{1,1}, ..., TFD_{1,M}\}$ et le complexe conjugué $TFD_2^*$ du deuxième ensemble de valeurs complexes, puis l'application 50 d'une transformation de Fourier discrète inverse sur le résultat du calcul de l'étape 48.

On entend ici par calcul du produit entre le premier ensemble de valeurs complexes $TFD_1$ et le complexe conjugué $TFD_2^*$ du deuxième ensemble de valeurs complexes le produit effectué entre valeurs de même rang :

$$TFD_{1,k} \times TDF_{2,k}^*$$ pour chaque indice k compris entre 1 et M.

Par application de la TFD inverse, on obtient la fonction d'intercorrélation sur M points de la paire de voies de réception traitée. Le procédé comprend ensuite une détermination 52 du maximum de la fonction d'intercorrélation sur M points, en d'autres termes, la détermination de l'indice temporel k correspondant à la valeur maximale de la fonction d'intercorrélation. Le décalage temporel entre les voies $V_1$ et $V_2$ est obtenu par multiplication de la valeur de l'indice temporel correspondant par la période d'échantillonnage 1/Fe ou $T_0/M$.

L'indice k correspondant au décalage temporel obtenu pour la paire de voies traitée est mémorisé à l'étape 54. En alternative, le décalage temporel obtenu est mémorisé à l'étape 54.

Le procédé retourne à l'étape 46 pour sélection d'une nouvelle paire de voies à traiter, et les étapes 48 à 54 sont répétées jusqu'à ce qu'un décalage temporel soit déterminé pour chacune des voies par rapport à au moins une autre voie de réception, le procédé d'étalonnage de décalage prend alors fin.

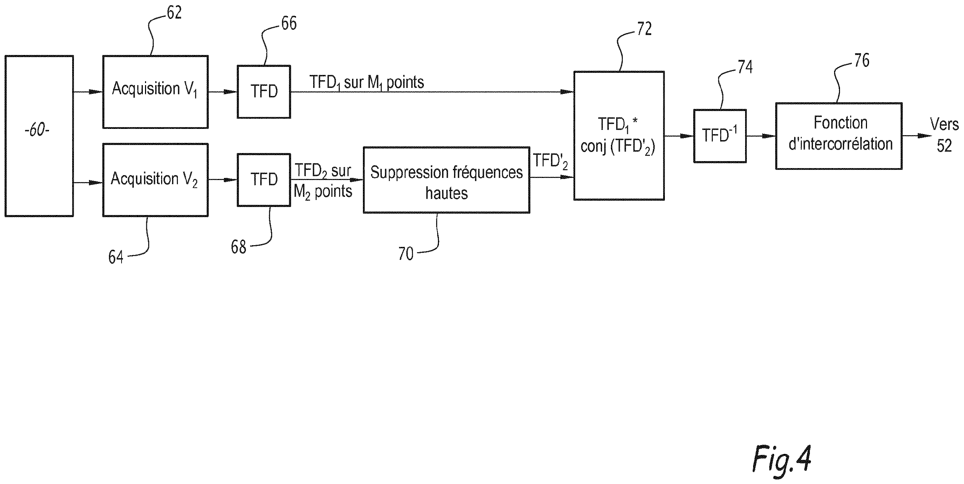

La figure 4 est un schéma synoptique d'étapes d'un procédé d'étalonnage de décalage temporel entre voies de réception mis en œuvre avec un système de réception multivoies de deuxième type, dans lequel les $CAN_i$ ont des fréquences d'échantillonnage $Fe_i$ différentes.

Le procédé comprend une première étape d'injection de bruit analogique 60, analogue à l'étape 40 précédemment décrite en référence à la figure 3.

Optionnellement, une sélection de paire de voies de réception à traiter est également effectuée. Lorsque N=2, le système comporte une seule paire de voies qui forme la paire de voies à traiter.

Des étapes 62, 64 d'acquisition d'ensembles d'échantillons sur une première voie $V_1$ et une deuxième voie $V_2$ formant une paire de voies, sur une tranche temporelle d'acquisition $T_0$.

On acquiert $M_1$ échantillons sur la première voie et $M_2$ échantillons sur la deuxième voie, avec $M_1$ différent de $M_2$, et $M_1=Fe_1.T_0$ et $M_2=Fe_2.T_0$.

Ainsi, avantageusement, même si le nombre de points acquis respectivement sur la première voie de réception diffère du nombre de points acquis sur la deuxième voie de réception, la résolution spectrale de chaque TFD est égale à $1/T_0$.

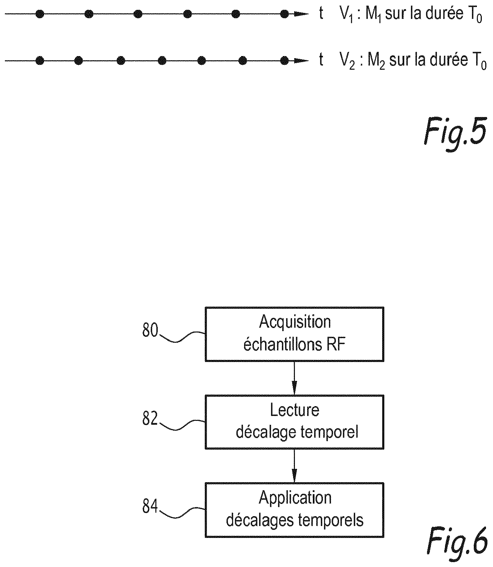

La figure 5 illustre schématiquement un exemple de points correspondant à $M_1$ et $M_2$ échantillons temporels acquis respectivement sur une première voie $V_1$ avec une fréquence d'échantillonnage $Fe_1$ et une deuxième voie $V_2$ avec une fréquence d'échantillonnage $Fe_2$, avec un nombre $M_2 > M_1$ dans cet exemple.

De retour à la figure 4, suite à l'acquisition de $M_1$ échantillons sur la première voie $V_1$ et de $M_2$ échantillons sur la deuxième voie $V_2$, on applique une transformation de Fourier discrète sur chacune des voies (étapes 66, 68).

La TFD appliquée à l'étape 66 aux $M_1$ échantillons de la première voie permet d'obtenir un premier ensemble de $M_1$ valeurs complexes d'échantillons transformés, noté $TFD_1$ : $\{TFD_{1,1}, ..., TFD_{1,M_1}\}$.

La TFD appliquée à l'étape 68 aux $M_2$ échantillons de la deuxième voie permet d'obtenir un deuxième ensemble de $M_2$ valeurs complexes d'échantillons transformés, noté $TFD_2$ : $\{TFD_{1,1}, ...,TFD_{1,M_2}\}$.

En variante, les TFD des étapes 66 et 68 ne retiennent que la moitié ($M_1/2$ et $M_2/2$) des valeurs complexes des TFD, étant donnée la propriété de symétrie hermitienne du spectre d'un signal réel.

Il est à noter que les transformations de Fourier discrètes appliquées aux étapes 66, 68 sont de tailles différentes, et sont de préférence appliquées par calcul logiciel par le processeur 180.

Une étape suivante 70 consiste à déterminer le nombre le plus grand d'échantillons fournis, $M_{max}=Max(M_1, M_2)$, qui est $M_2$ dans l'exemple de la figure 4, et à supprimer dans l'ensemble de valeurs complexes de $TFD_2$, les $M_2-M_1$ valeurs correspondant aux fréquences les plus grandes du domaine réel.

On obtient un deuxième ensemble de valeurs complexes tronqué, $TFD'_2$, de même cardinal $M_{min}=M_1$ que le premier ensemble de valeurs complexes.

Bien entendu, le procédé s'applique de manière analogue si le nombre d'échantillons $M_1$ fournis sur la première voie est supérieur au nombre d'échantillons $M_2$ fournis sur la deuxième voie, avec $M_{max}=M_1$ et $M_{min}=M_2$.

A l'issue de l'étape 70 on dispose de deux ensembles de valeurs complexes de même cardinal $M_{min}$, égal au nombre le plus petit entre $M_1$ et $M_2$.

On applique ensuite à l'étape 72 un calcul du produit complexe entre le premier ensemble de valeurs complexes $TFD_1$ et le complexe conjugué $TFD'_2{}^*$ du deuxième ensemble de valeurs complexes tronqué, puis une transformation de Fourier discrète inverse (étape 74) sur le résultat du calcul 72.

De manière analogue au mode de réalisation de la figure 3, le produit est effectué entre valeurs de même rang : $TFD_{1,k} \times TDF'^{*}_{2,k}$ pour chaque indice $k$ compris entre 1 et Mmin.

Finalement, une fonction d'intercorrélation 76, sur $M_{min}=min(M_1, M_2)$ points, est obtenue.

Le procédé se poursuit alors pour rechercher le maximum de la fonction d'intercorrélation, comme décrit ci-dessus en référence à l'étape 52 de la figure 3.

La figure 6 est un schéma synoptique des principales étapes d'un procédé de synchronisation entre voies de réception d'un système de réception multivoies, dans un mode de réalisation.

Le procédé comprend une étape 80 d'acquisition, en sortie des modules d'interfaçage $10_i$, d'ensembles d'échantillons de signaux numériques fournis par les voies de réception $V_1$ à $V_N$, lorsque les modules de commutation $16_1$ à $16_N$ sont en première position.

L'étape 80 est suivie d'une lecture 82 des décalages temporels mémorisés à appliquer à chacune des voies de réception.

Ensuite, une compensation de décalage temporel est appliquée à l'étape 84, de manière à fournir en entrée du module de traitement numérique des séries d'échantillons numériques synchronisés temporellement sur une durée dite de synchronisation donnée.

Par exemple, la compensation de décalage temporel est effectuée par la mise en œuvre de dispositifs de synchronisation tels que décrits ci-dessous, adaptés pour fonctionner à la fois avec un système de réception de premier type et un système de réception de deuxième type.

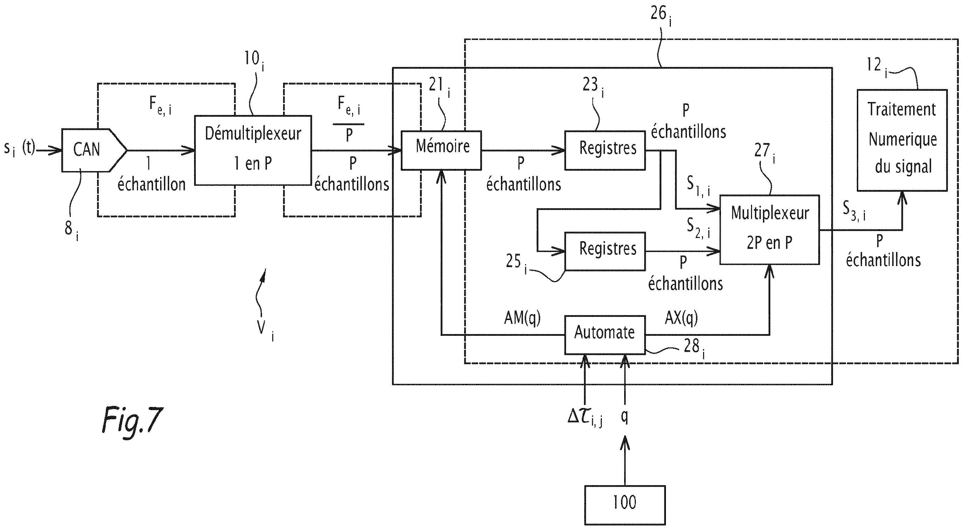

En particulier, on décrit ci-dessous en référence aux figures 7 à 15 un mode de réalisation d'un module de compensation de décalage temporel $26_i$, appelé également dispositif de synchronisation, adapté notamment pour un système de réception de deuxième type, dans lequel les fréquences d'échantillonnage $Fe_i$ sont différentes.

Chaque fréquence d'échantillonnage $Fe_i$ est bien supérieure à la fréquence maximale de fonctionnement des composants numériques programmables (FPGA) situés en aval des CAN, en particulier dans le module de traitement numérique de signal 12.

Le module d'interfaçage $10_i$ a pour fonction de transformer le flux d'échantillons série au rythme $Fe_i$ en flux série de paquets de P échantillons en parallèle à la première fréquence $\dfrac{Fe_i}{P}$ , P étant un nombre entier non nul, cette première fréquence étant plus lente et compatible avec la deuxième fréquence ou fréquence de travail des composants numériques programmables $F_T$. On désigne par $S_i(t)$ le signal numérique délivré par le module d'interfaçage $10_i$, issu

d'un signal analogique $s_i(t)$ correspondant.

Le module d'interfaçage $10_i$ est, dans ce mode de réalisation, un démultiplexeur à un ou plusieurs étages de démultiplexage, fournissant des paquets de $P$ échantillons en parallèle. Les démultiplexeurs $10_i$ des différentes voies de réception ne sont pas synchronisés, et ne sont pas synchronisables car les fréquences $Fe_i$ sont différentes, et par conséquent les valeurs $\frac{Fe_i}{P}$ sont également différentes.

Le dispositif de synchronisation $26_i$, branché entre le module d'interfaçage $10_i$ et le module de traitement numérique $12_i$, a pour fonction, à partir d'un flux d'entrée série de paquets de $P$ échantillons successifs passés en parallèle, les échantillons étant obtenus à une fréquence d'échantillonnage $Fe_i$ et ayant subi un possible décalage de temps lié à la voie $i$, de former des séries de $N_i$ échantillons successifs, toujours formatées en paquets de $P$ échantillons successifs en parallèle, dont le premier échantillon desdites séries correspond, quel que soit $i$, au même temps absolu, c'est-à-dire au temps courant dans le flux d'entrée corrigé du décalage temporel à appliquer.

Chaque dispositif de synchronisation $26_i$ reçoit en entrée une valeur de décalage temporel $\Delta\tau_{i,r}$ entre la voie $V_i$ et la voie de référence $V_r$, calculé par le procédé décrit ci-dessus.

Le système de synchronisation comprend un module de comptage 100, qui est, dans le mode de réalisation préféré un module de comptage commun à tous les dispositifs de synchronisation $26_i$, qui distribue une même valeur de compteur à un instant donné à chaque dispositif de synchronisation.

En variante, le module de comptage 100 est adapté à effectuer une synchronisation des compteurs des dispositifs de synchronisation $26_i$, par exemple par une remise à zéro initiale, de façon à ce que chacun des compteurs délivre une même valeur de compteur à chaque dispositif de synchronisation $26_i$.

Chaque module de traitement numérique $12_i$ peut, par exemple, réaliser une transformée de Fourier discrète (TFD) sur les $N_i$ échantillons successifs d'une série, correspondant à une durée de signal $\Delta T$ qui est la même pour toutes les voies de réception. Ainsi, quel que soit i :

$$\frac{N_i}{Fe_i} = \Delta T \qquad (EQ1)$$

En particulier pour des applications interférométriques, il est nécessaire que les séries de $N_i$ échantillons successifs pour des valeurs de i différentes, correspondent toutes au même intervalle de temps absolu pour que le déphasage entre fin de voies, entre deux voies données, soit représentatif de celui en sortie des antennes desdites deux voies sur un même signal incident.

La figure 7 illustre en détail un dispositif de synchronisation $26_i$ faisant partie de la voie de réception $V_i$.

Le dispositif de synchronisation $26_i$ reçoit en entrée des paquets de $P$ échantillons à la première fréquence $\frac{Fe_i}{P}$, et fournit en sorties des séries de $N_i$ échantillons, par paquets de $P$ échantillons.

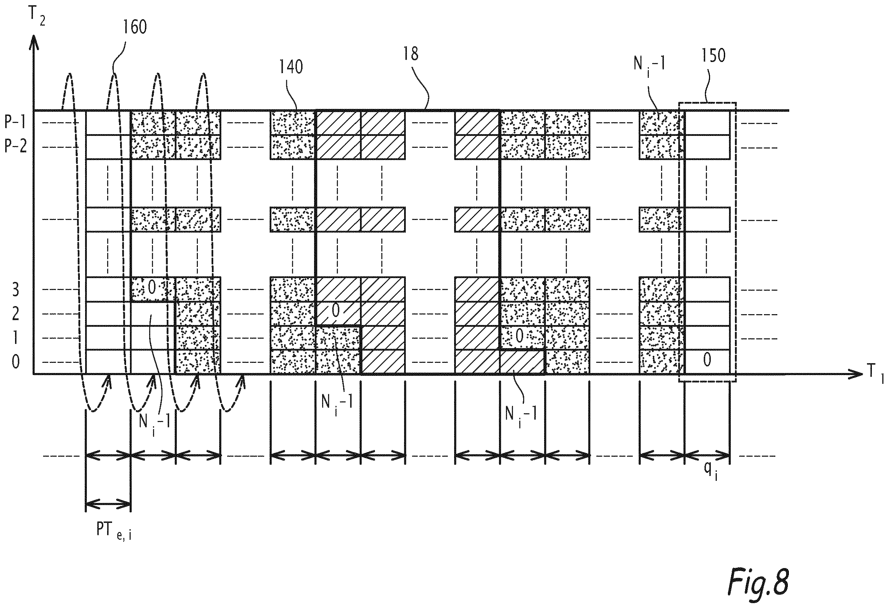

La figure 8 illustre un premier problème à résoudre du fait que le nombre $N_i$ n'est pas, généralement, un multiple de $P$.

La figure 8 illustre la parallélisation du flux d'échantillons en $P$ lignes parallèles, réalisée par le démultiplexeur $10_i$. Chaque échantillon est symbolisé par une case 140. Ces échantillons sont illustrés dans un diagramme à deux axes temporels $T_1$ et $T_2$. Les paquets 150 de $P$ échantillons sont référencés par un indice $q_i$. La durée correspondant à un paquet est de $PTe_i = \frac{P}{Fe_i}$. Les flèches recourbées 160 indiquent la continuité des échantillons dans le temps.

Les séries 18 à fournir en sortie sont des séries de $N_i$ échantillons, référencées par un indice $k_i$, montrées en en traits épais. Cependant, le nombre $N_i$ n'étant pas un multiple de $P$, chaque série 18 ne commencent pas systématiquement par un paquet de $P$ échantillons lui appartenant intégralement, comme illustré à la figure 8 par l'échantillon d'indice 0 de chaque paquet.. La position du premier échantillon d'une série 18 dans un paquet de $P$ échantillons 150 évolue dans le temps, et dépend du reste $R_i$ de la division euclidienne de $N_i$ par $P$.

Le nombre $N_i$ s'écrit sous la forme :

$$N_i = M \times P + R_i \qquad (EQ\ 2)$$

avec $0 < R_i < P$, $M$ étant la partie entière de $N_i$ divisé par $P$, $\mathrm{Ent}\left(\frac{N_i}{P}\right)$, Ent(.) étant la fonction partie entière, et $R_i$ le

reste de la division euclidienne de $N_i$ par P.

En utilisant l'opérateur modulo Mod(.,.) on écrit :

$$R_i = \text{Mod}(N_i, P) \qquad \text{(EQ3)}$$

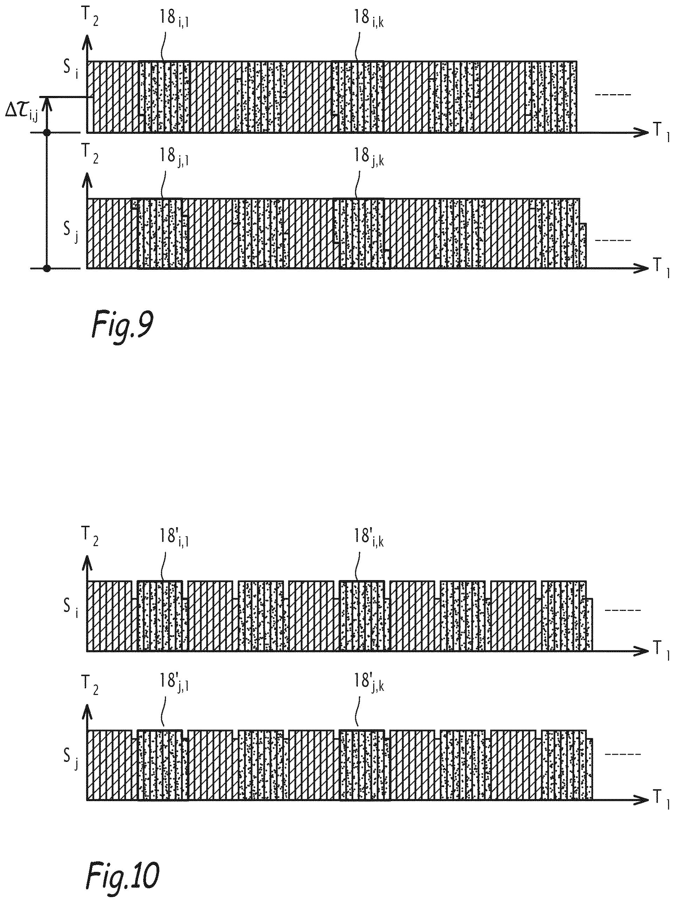

Les figures 9 et 10 illustrent chacune des échantillons issus de deux voies de réception $V_i$ et $V_j$, à synchroniser entre elles, selon un double axe temporel de manière analogue à la représentation de la figure 8, par paquets de $P$ échantillons correspondant à une même abscisse sur l'axe $T_1$.

Les fréquences d'échantillonnage sont respectivement égales à $Fe_i$ et $Fe_j$, elles sont différentes, et de plus il y un décalage temporel, noté ici $\Delta\tau_{i,j}$, entre les deux voies, comme illustré à la figure 9.

Une de ces deux voies de réception est la voie de référence.

La voie de référence est choisie comme étant la voie qui véhicule le signal reçu avec un retard de temps par rapport à toutes les autres voies.

Les séries d'échantillons $18_{i,1}$ et $18_{j,1}$ comprenant respectivement $N_i$ et $N_j$ échantillons sont à synchroniser en sortie comme expliqué ci-dessus et comme illustré schématiquement par la figure 10.

En effet, les séries référencées $18'_{i,1}$ et $18'_{j,1}$ sont composées de mêmes échantillons de signal que les séries correspondantes respectives $18i,i$ et $18_{j,1}$ de la figure 9. Les séries $18'_{i,1}$ et $18'_{j,1}$ sont obtenues en sortie des dispositifs de synchronisation $26_i$ et $26_j$ mis en œuvre sur chacune des voies $V_i$ et $V_j$.

Comme illustré à la figure 7, le dispositif de synchronisation $26_i$ d'une voie de réception $V_i$ comporte une mémoire $21_i$ accessible en écriture et en lecture par des accès indépendants, dans laquelle sont mémorisés des paquets 150 d'entrée de $P$ échantillons du signal $S_i$ numérisé fournis par le module $10i$, écrits dans la mémoire $21_i$ à la première fréquence $Fe_i/P$.

Le dispositif de synchronisation comprend également deux ensembles de registres $23_i$ et $25_i$, chaque ensemble comprenant un nombre de registres égal à $P$ fois le nombre de bits des échantillons. Le premier ensemble de registres $23_i$ est alimenté par des premiers paquets de $P$ échantillons lus dans la mémoire $21_i$ à la deuxième fréquence $F_T$, qui est la fréquence de travail.

Le deuxième ensemble de registres $25_i$ est branché en sortie du premier ensemble de registres $23_i$ et est adapté à mémoriser des deuxièmes paquets de $P$ échantillons. Chaque deuxième paquet est décalé d'une période d'horloge $1/F_T$ par rapport à un premier paquet de P échantillons correspondant.

En notant $S_{1,i}$ le signal numérisé de sortie du premier ensemble de registres $23_i$ et $S_{2,i}$ le signal numérisé de sortie du deuxième ensemble de registres $25_i$ la relation suivante est vérifiée :

$$S_{2,i}(t) = S_{1,i}\left(t - \frac{1}{F_t}\right) \quad \text{(EQ4)}$$

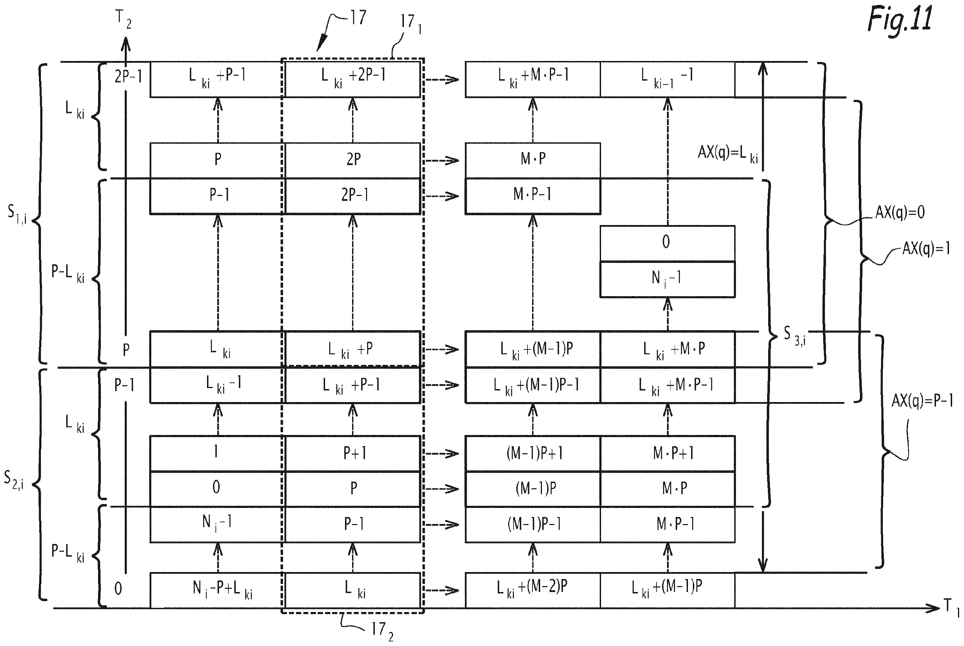

En d'autres termes, et comme illustré à la figure 11, à un instant donné, les sorties des deux ensembles de registres $25_i$ et $23_i$ forment un paquet double 17 de 2P échantillons successifs. Par exemple, le paquet 17 est formé des paquets $17_1$ et $17_2$. Le paquet $17_2$ d'échantillons issus du deuxième ensemble de registres $25_i$ comporte les échantillons d'indices $\{L_{k_i}, ..., L_{k_i} + P - 1\}$ et le paquet $17_1$ d'échantillons issus du premier ensemble de registres $23_i$ comporte les échantillons d'indices $\{L_{k_i} + P, ...., L_{k_i} + 2P - 1\}$.

Les sorties des premier et deuxième ensembles de registres sont branchés en entrée d'un multiplexeur $27_i$, adapté à sélectionner $P$ échantillons consécutifs parmi les $2P$ échantillons d'un paquet double en utilisant une adresse de multiplexage, pour former un troisième paquet de $P$ échantillons.

Le dispositif de synchronisation $26_i$ comprend un automate $28_i$ qui est un module programmable comportant au moins un processeur de calcul et un élément de mémoire adapté à mémoriser des valeurs de paramètres.

Dans un mode de réalisation, l'automate est réalisé à l'aide de circuits numériques. Dans un autre mode de réalisation, l'automate est réalisé dans le FPGA dédié à la réalisation du module $12_i$.

L'automate $28_i$ qui reçoit en entrée la valeur de décalage temporel $\Delta\tau_{i,j}$ à appliquer et une valeur $q$ d'un compteur courant à la deuxième fréquence $F_T$ et comptant en permanence cycliquement de 0 à $Q_A-1$, $Q_A$ correspondant au nombre d'états du compteur qui vaut précisément (M + 1) x $P$, la période de ce cycle valant donc :

$$T_A = \frac{Q_A}{F_T} = P \times \Delta T \qquad \text{(EQ5)}$$

En pratique, il est usuel de choisir $P = 2^B$ où $B$ est une valeur entière, par exemple $B = 3$.

En variante, la valeur de compteur $q$ est calculée par l'automate $28_i$ à partir d'une horloge interne de cet automate (non représentée en figure 7).

L'automate $28_i$ est adapté à calculer, en temps réel, pour chaque valeur courante $q$, une adresse de lecture dans la mémoire $21_i$, $AM(q)$, et une adresse de multiplexage du multiplexeur $27_i$, $AX(q)$. Il est à noter que l'indice $i$ a été omis pour simplifier les notations.

Les adresses de multiplexage sont comprises entre 0 et $P$ -1, et sont calculées modulo $P$. Plusieurs exemples d'adresses de multiplexage $AX(q)$ sont montrés à la figure 11.

L'automate $28_i$ calcule également un indicateur de maintien $I_{AM}(q)$ de l'adresse de lecture en mémoire courante, qui est mis en œuvre lorsqu'une adresse de multiplexage courante est inférieure à une adresse de multiplexage précédente.

Les valeurs calculées par l'automate $28_i$ sont, dans le mode de réalisation préféré, données par les formules suivantes.

À l'initialisation :

$$I_{AM}(q-1) = 0 \qquad \text{(EQ6)}$$

$$AM(q-1) = \text{Ent}\left(\frac{\Delta \tau_{i,j}}{P}\right) \text{ si } \Delta \tau_{i,j} > 0 \quad \text{(EQ7)}$$

$$AM(q-1) = -1 \quad \text{si } \Delta \tau_{i,j} = 0 \text{ (EQ8)}$$

Après initialisation, les formules récurrentes suivantes sont appliquées :

$$AX(q) = \text{Mod}\left(\text{Ent}\left(\frac{q}{P}\right) \times (P - R_i) - \text{Mod}(\Delta \tau_{i,j}, P), P\right) \qquad \text{(EQ9)}$$

$$I_{AM}(q) = 0 \text{ si } AX(q) \geq AX(q-1) \qquad \text{(EQ10)}$$

$$I_{AM}(q) = 1 \text{ si } AX(q) < AX(q-1) \qquad \text{(EQ11)}$$

$$AM(q) = \text{Mod}(AM(q-1) + 1 - I_{AM}(q), N_i) \qquad \text{(EQ12)}$$

Le décalage temporel $\Delta \tau_{i,j}$ est une donnée d'entrée prise en compte à chaque début de période d'automate $T_A$.

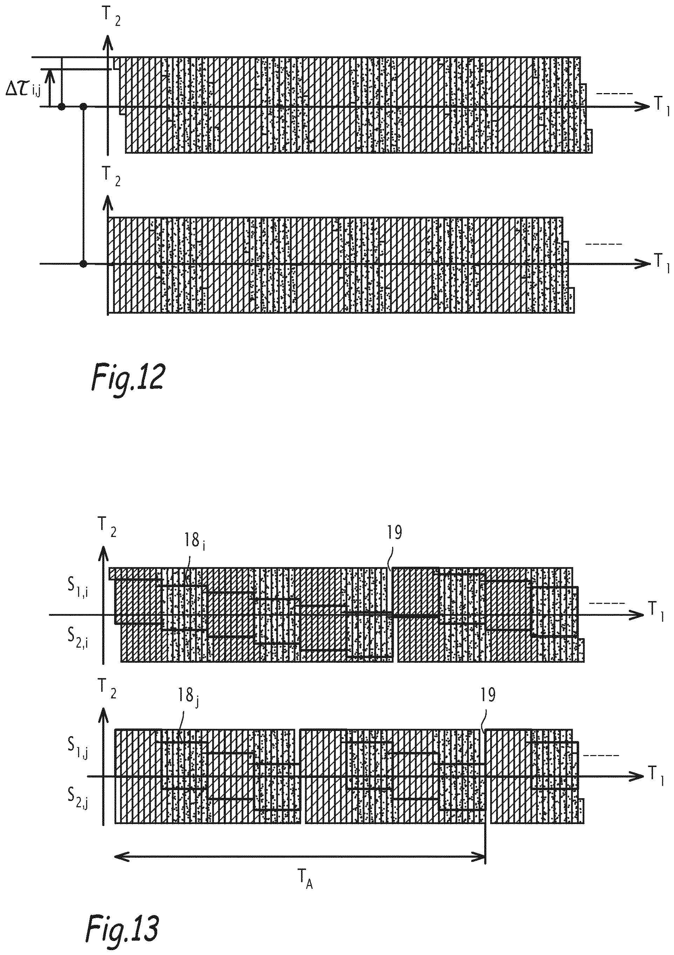

Les figures 12 et 13 illustrent un exemple de synchronisation entre deux voies sur une période d'automate $T_A$. Dans l'exemple, $P = 8$, $N_i = 62$, $N_j = 63$ et $\Delta \tau_{i,j}$ valant sensiblement $\frac{14}{8F_T}$ ou $\frac{14}{Fe_i}$.

Les séries synchronisées $18_i$, $18_j$ sont entourées d'un cadre en traits épais à la figure 13. Les colonnes 19 de la figure 13 indiquent le maintien de l'adresse de lecture en mémoire précédente.

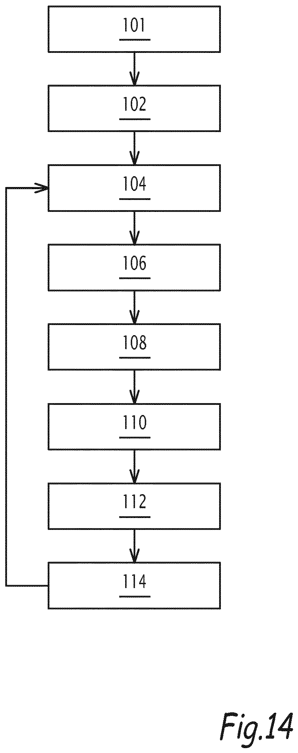

La figure 14 est un logigramme des principales étapes d'un procédé de synchronisation mis en œuvre par un dispositif de synchronisation $26_i$ tel que décrit ci-dessus.

Le procédé est mis en œuvre en parallèle sur toutes les voies de réception. Les étapes décrites ci-après concernent une seule voie de réception $V_i$. Les mêmes étapes sont effectuées sur toutes les voies de réception.

Le procédé comprend une première étape 101 de réception et mémorisation du décalage temporel $\Delta \tau_{r,i}$ par rapport à la voie de référence à appliquer.

À l'étape d'initialisation 102, les valeurs d'adresse de lecture $AM(q)$, d'adresse de multiplexage $AX(q)$ et d'indicateur de maintien $I_{AM}(q)$ sont initialisées et mémorisées selon les formules (EQ6) à (EQ8) ci-avant définies.

À l'étape 104, la valeur $q$ de compteur courant est reçue.

Comme expliqué précédemment, chaque automate de chaque voie de réception utilise la même valeur de compteur courant $q$ au même instant temporel, grâce à la mise en œuvre du module de comptage 100.

À l'étape 106 est calculée et mémorisée l'adresse de multiplexage $AX(q)$ courante, selon la formule (EQ9), et à l'étape suivante 108 l'adresse de multiplexage $AX(q)$ courante est comparée à l'adresse de multiplexage précédente mémorisée.

L'indicateur de maintien $I_{AM}(q)$ est ensuite calculé et mémorisé à l'étape 110, le calcul étant effectué en fonction du résultat de l'étape de comparaison précédente selon les formules (EQ10) et (EQ11). L'adresse de lecture *AM(q)* est également calculée selon la formule (EQ12), et mémorisée.

Ensuite on obtient à l'étape 112, à partir des premier ensemble de registres et deuxième ensemble de registres, les paquets de *P* échantillons correspondant à l'adresse de lecture *AM(q)* calculée.

Ensuite à l'étape 114 est appliquée l'adresse de multiplexage calculée *AX(q)* pour obtenir un troisième paquet de *P* échantillons faisant partie de la série courante de $N_i$ échantillons.

Le procédé retourne ensuite à l'étape 104 de réception d'une valeur de compteur courant.

En d'autres termes, à chaque coup d'horloge de deuxième fréquence $F_T$, la valeur de *q* s'incrémente de 1, et on calcule *AX(q)*, $I_{AM}(q)$ et *AM(q)*.

Ces valeurs calculées sont ensuite appliquées pour la formation d'une série de $N_i$ échantillons comme expliqué en détail ci-dessus.

Il est entendu que le dispositif et procédé de synchronisation décrits ci-dessus s'appliquent également dans le cas dans lequel chaque voie de réception comporte un convertisseur analogique-numérique fonctionnant à une même fréquence d'échantillonnage *Fe.*

## Revendications

1. Procédé d'étalonnage de décalage temporel entre voies ($V_1$,..., $V_N$) d'un système de réception multivoies (2) de signaux radioélectriques, le système (2) comportant un ensemble de voies de réception ($V_1$,..., $V_N$) de signaux radioélectriques, chaque voie de réception comportant une chaîne de réception ($6_1$,.., $6_N$) délivrant un signal électrique en entrée d'un convertisseur analogique numérique ($8_1$,..., $8_N$) ayant une fréquence d'échantillonnage associée, et un module d'interfaçage ($10_1$,..., $10_N$) branché en sortie dudit convertisseur analogique numérique ($8_1$,..., $8_N$) et adapté à fournir des ensembles d'échantillons de signal numérisé en entrée d'un module ($12_1$,...,$12_N$) de traitement numérique de signal comportant un ou plusieurs composants numériques programmables, le procédé comprenant, suite à une mise sous tension du système de réception :

      - une injection (40, 60) sur toutes les voies de réception d'un même signal aléatoire représentant un bruit obtenu à partir d'une source de bruit (14, 29),
      - pour au moins une paire de voies de réception comportant une première voie et une deuxième voie, une estimation (52, 76) d'un décalage temporel entre échantillons de signal numérisés fournis par lesdites première et deuxième voies, en utilisant un calcul d'une fonction d'intercorrélation entre un premier ensemble d'échantillons obtenus par la première voie de réception et un deuxième ensemble d'échantillons obtenus par la deuxième voie de réception,
      - une mémorisation (54) du décalage temporel estimé en association avec ladite paire de voies.

2. Procédé selon la revendication 1, dans lequel ledit signal aléatoire représentant un bruit injecté est un bruit analogique thermique injecté en entrée de chaque chaîne de réception ($6_1$,.., $6_N$).

3. Procédé selon la revendication 1, dans lequel ledit signal aléatoire représentant un bruit injecté est un bruit analogique obtenu à partir d'une séquence numérique pseudo-aléatoire et injecté en entrée du convertisseur analogique-numérique ($8_1$,.., $8_N$) de chaque voie de réception ($V_1$,..., $V_N$).

4. Procédé selon l'une quelconque des revendications 1 à 3, dans lequel l'estimation dudit décalage temporel comporte une détection d'un maximum de ladite fonction d'intercorrélation, ledit décalage temporel étant un décalage temporel numérique fonction d'un indice temporel correspondant audit maximum.

5. Procédé selon l'une quelconque des revendications 1 à 4, mis en œuvre dans un système de réception multivoies (2) dans lequel chaque convertisseur analogique numérique ($8_1$, ..., $8_N$) a une même fréquence d'échantillonnage ($F_e$), dans lequel le calcul d'une fonction d'intercorrélation comporte des étapes de :

      - acquisition (42) d'un premier ensemble d'échantillons sur ladite première voie de réception et d'un deuxième ensemble de même nombre d'échantillons sur ladite deuxième voie de réception ;
      - application (44) d'une transformation de Fourier discrète sur ledit premier ensemble d'échantillons, permettant d'obtenir un premier ensemble de valeurs complexes d'échantillons transformés, et application (44) d'une transformation de Fourier discrète sur ledit deuxième ensemble d'échantillons, permettant d'obtenir un deuxième ensemble de valeurs complexes d'échantillons transformés,
- calcul (48) du produit complexe entre le premier ensemble de valeurs complexes et le complexe conjugué du deuxième ensemble de valeurs complexes,
- obtention (50) de ladite fonction d'intercorrélation par application d'une transformation de Fourier discrète inverse audit produit complexe.

6. Procédé selon l'une quelconque des revendications 1 à 4, mis en œuvre dans un système de réception multivoies dans lequel chaque convertisseur analogique numérique ($8_1$,..., $8_N$) a une fréquence d'échantillonnage ($Fe_1$,...,$Fe_N$) propre associée, dans lequel le calcul d'une fonction d'intercorrélation comporte des étapes de :

- acquisition (62) d'un premier ensemble d'un premier nombre $M_1$ d'échantillons sur ladite première voie de réception pendant une durée ($T_0$) prédéterminée, et acquisition (64) d'un deuxième ensemble d'un deuxième nombre $M_2$ d'échantillons, différent du premier nombre, sur ladite deuxième voie de réception, pendant ladite durée prédéterminée,
- application (66) d'une transformation de Fourier discrète sur ledit premier ensemble d'échantillons, permettant d'obtenir un premier ensemble de $M_1$ valeurs complexes d'échantillons transformés, et application (68) d'une transformation de Fourier discrète sur ledit deuxième ensemble d'échantillons, permettant d'obtenir un deuxième ensemble de $M_2$ valeurs complexes d'échantillons transformés,
- obtention (70) de deux ensembles de valeurs complexes de même cardinal par suppression des valeurs complexes associées aux fréquences les plus élevées dans l'ensemble de plus grand cardinal,
- calcul (72) du produit complexe entre le premier ensemble de valeurs complexes et le complexe conjugué du deuxième ensemble de valeurs complexes de même cardinal,
- obtention (74) de ladite fonction d'intercorrélation par application d'une transformation de Fourier discrète inverse audit produit.

7. Procédé selon l'une quelconque des revendications 1 à 6, appliqué dans un système de réception multivoies comportant un nombre N de voies de réception supérieur ou égal à 2, comportant une sélection d'une voie de réception de référence, et l'estimation d'un décalage temporel pour chaque paire de voies composée de ladite voie de réception de référence et d'une deuxième voie parmi les N-1 autres voies de réception.

8. Procédé de synchronisation entre voies d'un système de réception multivoies de signaux radioélectriques, le système comportant un ensemble de voies de réception de signaux radioélectriques, chaque voie de réception comportant une chaîne de réception délivrant un signal électrique en entrée d'un convertisseur analogique numérique ayant une fréquence d'échantillonnage associée, et un module d'interfaçage branché en sortie dudit convertisseur analogique-numérique et adapté à fournir des ensembles d'échantillons de signal numérisé en entrée d'un module de traitement numérique de signal comportant un ou plusieurs composants numériques programmables,

comportant, pour au moins une paire de voies de réception, une phase d'étalonnage de décalage temporel mettant en œuvre un procédé conforme à l'une des revendications 1 à 7,
et une phase d'application d'une compensation du décalage temporel estimé en sortie du module d'interfaçage d'au moins une des voies de ladite paire de voies par rapport à une voie de référence, de manière à fournir des séries d'échantillons numériques synchronisés en entrée du module de traitement numérique du signal, chaque série d'échantillons numériques synchronisés comportant un nombre d'échantillons correspondant à une même durée et chaque premier échantillon de chaque série correspondant temporellement à un même instant.

9. Système d'étalonnage de décalage temporel entre voies ($V_1$,..., $V_N$) d'un système de réception multivoies (2) de signaux radioélectriques comportant un ensemble de voies de réception ($V_1$,..., $V_N$) de signaux radioélectriques, chaque voie de réception comportant une chaîne de réception ($6_1$,.., $6_N$) délivrant un signal électrique en entrée d'un convertisseur analogique-numérique ($8_1$,..., $8_N$) ayant une fréquence d'échantillonnage associée, et un module d'interfaçage ($10_1$,.... $10_N$) branché en sortie dudit convertisseur analogique-numérique ($8_1$,..., $8_N$) et adapté à fournir des ensembles d'échantillons de signal numérisé en entrée d'un module (12) de traitement numérique de signal comportant un ou plusieurs composants numériques programmables, le système d'étalonnage comportant:

- une source de bruit (14, 29) adaptée à injecter un même signal aléatoire représentant un bruit sur toutes les voies de réception ($V_1$..., $V_N$),
- un module de calcul (22) adapté à estimer, pour au moins une paire de voies de réception comportant une première voie et une deuxième voie, un décalage temporel entre échantillons de signal numérisés fournis par lesdites première et deuxième voies, en utilisant un calcul d'une fonction d'intercorrélation entre un premier ensemble d'échantillons obtenus par la première voie de réception et un deuxième ensemble d'échantillons obtenus par la deuxième voie de réception,
- une mémoire (20) adaptée à mémoriser le décalage temporel estimé en association avec ladite paire de voies.

10. Système de synchronisation entre voies d'un système de réception multivoies de signaux radioélectriques, le système de réception comportant un ensemble de voies de réception de signaux radioélectriques, chaque voie de réception comportant une chaîne de réception délivrant un signal électrique en entrée d'un convertisseur analogique-numérique ayant une fréquence d'échantillonnage associée, et un module d'interfaçage branché en sortie dudit convertisseur analogique numérique et adapté à fournir des ensembles d'échantillons de signal numérisé en entrée d'un module de traitement numérique de signal comportant un ou plusieurs composants numériques programmables,

le système de synchronisation comportant un système d'étalonnage de décalage temporel selon la revendication 9, mis en œuvre dans une phase d'étalonnage de décalage temporel pour au moins une paire de voies de réception,

et chaque voie de réception comportant un module de compensation ($26_1$, ..., $26_N$) de décalage temporel, branché en sortie d'un module d'interfaçage ($10_1$,.... $10_N$) correspondant, le module de compensation de décalage temporel d'une voie étant adapté à compenser le décalage temporel estimé par rapport à une voie de référence, de manière à fournir des séries d'échantillons numériques synchronisés en entrée du module (12) de traitement numérique du signal, chaque série d'échantillons numériques synchronisés comportant un nombre d'échantillons correspondant à une même durée et chaque premier échantillon de chaque série correspondant temporellement à un même instant.

**Patentansprüche**

1. Verfahren zur Kalibrierung der Zeitverschiebung zwischen Kanälen ($V_1$, ..., $V_N$) eines Mehrkanalempfangssystems (2) für Funksignale, wobei das System (2) eine Gruppe von Empfangskanälen ($V_1$, ..., VN) für Funksignale umfasst, wobei jeder Empfangskanal eine Empfangskette ($6_1$, ..., $6_N$) umfasst, die ein elektrisches Signal am Eingang eines digitalen Analogwandlers ($8_1$, ..., $8_N$) liefert, der mit einer zugehörigen Abtastfrequenz und ein Schnittstellenmodul ($10_1$, ..., $10_N$), das am Ausgang des digitalen Analogwandlers ($8_1$, ..., $8_N$) angeschlossen ist und dazu geeignet ist, Sätze von Abtastwerten des digitalisierten Signals am Eingang eines Moduls ($12_1$, ..., $12_N$) zur digitalen Signalverarbeitung zu liefern, das eine oder mehrere programmierbare digitale Komponenten umfasst, das Verfahren umfassend, nach einem Einschalten des Empfangssystems:

- eine Injektion (40, 60) auf alle Empfangskanäle eines gleichen Zufallssignals, das ein Rauschen darstellt, das von einer Rauschquelle (14, 29) erhalten wurde,
- für mindestens ein Paar von Empfangskanälen, die einen ersten Kanal und einen zweiten Kanal umfassen, eine Schätzung (52, 76) einer Zeitverschiebung zwischen digitalisierten Signalabtastwerten, die von dem ersten und dem zweiten Kanal geliefert werden, unter Verwendung einer Berechnung einer Kreuzkorrelationsfunktion zwischen einem ersten Satz von Abtastwerten, die durch den ersten Empfangskanal erhalten werden, und einem zweiten Satz von Abtastwerten, die durch den zweiten Empfangskanal erhalten werden,
- eine Speicherung (54) der geschätzten Zeitverschiebung in Verbindung mit dem genannten Kanalpaar.

2. - Verfahren nach Anspruch 1, wobei das Zufallssignal, das ein injiziertes Rauschen darstellt, ein thermisches analoges Rauschen ist, das in den Eingang jeder Empfangskette ($6_1$, ..., 6N) injiziert wird.

3. - Verfahren nach Anspruch 1, bei dem das Zufallssignal, das ein injiziertes Rauschen darstellt, ein analoges Rauschen ist, das aus einer digitalen Pseudozufallssequenz gewonnen und in den Eingang des Analog-Digital-Wandlers ($8_1$, ..., 8N) jedes Empfangskanals ($V_1$, ..., $V_N$) injiziert wird.

4. - Verfahren nach einem der Ansprüche 1 bis 3, wobei die Schätzung der Zeitverschiebung eine Detektion eines Maximums der Kreuzkorrelationsfunktion umfasst, wobei die Zeitverschiebung eine numerische Zeitverschiebung ist, die von einem Zeitindex abhängt, der dem Maximum entspricht.

5. - Verfahren nach einem der Ansprüche 1 bis 4, durchgeführt in einem Mehrwege-Empfangssystem (2), in dem jeder Analog-Digital-Wandler ($8_1$, ...,$8_N$) eine gleiche Abtastfrequenz ($F_e$) hat, wobei die Berechnung einer Kreuzkorrelationsfunktion die folgenden Schritte umfasst:

- Erfassen (42) eines ersten Satzes von Abtastwerten auf dem ersten Empfangskanal und eines zweiten Satzes mit der gleichen Anzahl von Abtastwerten auf dem zweiten Empfangskanal;

- Anwenden (44) einer diskreten Fourier-Transformation auf den ersten Satz von Abtastwerten, wodurch ein erster Satz von komplexen Werten von transformierten Abtastwerten erhalten wird, und Anwenden (44) einer diskreten Fourier-Transformation auf den zweiten Satz von Abtastwerten, wodurch ein zweiter Satz von komplexen Werten von transformierten Abtastwerten erhalten wird,

- Berechnung (48) des komplexen Produkts zwischen dem ersten Satz von komplexen Werten und dem konjugierten Komplex des zweiten Satzes von komplexen Werten,

- Erhalten (50) der Kreuzkorrelationsfunktion durch Anwenden einer inversen diskreten Fouriertransformation auf das komplexe Produkt.

6. - Verfahren nach einem der Ansprüche 1 bis 4, durchgeführt in einem Mehrwege-Empfangssystem, in dem jeder Analog-Digital-Wandler ($8_1$, ..., $8_N$) eine zugeordnete eigene Abtastfrequenz ($Fe_1$, ..., $Fe_N$) hat, wobei das Berechnen einer Kreuzkorrelationsfunktion die Schritte umfasst:

- Erfassen (62) eines ersten Satzes einer ersten Anzahl $M_1$ von Abtastwerten auf dem ersten Empfangskanal während einer vorbestimmten Zeit ($T_0$), und Erfassen (64) eines zweiten Satzes einer zweiten Anzahl $M_2$ von Abtastwerten, die sich von der ersten Anzahl unterscheidet, auf dem zweiten Empfangskanal während der vorbestimmten Zeit,

- Anwendung (66) einer diskreten Fourier-Transformation auf die erste Gruppe von Abtastwerten, wodurch eine erste Gruppe von $M_1$ komplexen Werten von transformierten Abtastwerten erhalten werden kann, und Anwendung (68) einer diskreten Fourier-Transformation auf die zweite Gruppe von Abtastwerten, wodurch eine zweite Gruppe von $M_2$ komplexen Werten von transformierten Abtastwerten erhalten werden kann,

- Erhalten (70) von zwei Sätzen komplexer Werte mit derselben Kardinalzahl durch Entfernen der komplexen Werte, die mit den höchsten Frequenzen in dem Satz mit der größeren Kardinalzahl verbunden sind,

- Berechnung (72) des komplexen Produkts zwischen dem ersten Satz komplexer Werte und dem konjugierten Komplex des zweiten Satzes komplexer Werte mit derselben Kardinalzahl,

- Erhalten (74) der Kreuzkorrelationsfunktion durch Anwenden einer inversen diskreten Fourier-Transformation auf das Produkt.

7. - Verfahren nach einem der Ansprüche 1 bis 6, angewendet in einem Mehrkanal-Empfangssystem mit einer Anzahl N von Empfangskanälen, die größer oder gleich 2 ist, umfassend eine Auswahl eines Referenz-Empfangskanals und das Schätzen einer Zeitverschiebung für jedes Kanalpaar, das aus dem Referenz-Empfangskanal und einem zweiten Kanal der N-1 anderen Empfangskanäle besteht.

8. - Verfahren zur Synchronisation zwischen Kanälen eines Mehrkanalempfangssystems für Funksignale, wobei das System eine Gruppe von Kanälen zum Empfang von Funksignalen umfasst, wobei jeder Empfangskanal eine Empfangskette, die ein elektrisches Signal am Eingang eines Analog-Digital-Wandlers mit einer zugehörigen Abtastfrequenz liefert, und ein Schnittstellenmodul umfasst, das am Ausgang des Analog-Digital-Wandlers angeschlossen und so beschaffen ist, dass es Sätze von Abtastwerten des digitalisierten Signals am Eingang eines Moduls zur digitalen Signalverarbeitung liefert, das eine oder mehrere programmierbare digitale Komponenten umfasst,

die für mindestens ein Paar von Empfangskanälen eine Zeitverschiebungskalibrierungsphase umfasst, in der ein Verfahren nach einem der Ansprüche 1 bis 7 angewendet wird,

und eine Anwendungsphase einer Kompensation der geschätzten Zeitverschiebung am Ausgang des Schnittstellenmoduls von mindestens einem der Kanäle des Paars von Kanälen in Bezug auf einen Referenzkanal, um so Serien von synchronisierten digitalen Abtastwerten am Eingang des Moduls zur digitalen Signalverarbeitung zu liefern, wobei jede Serie von synchronisierten digitalen Abtastwerten eine Anzahl von Abtastwerten umfasst, die einer gleichen Dauer entspricht, und jeder erste Abtastwert jeder Serie zeitlich einem gleichen Zeitpunkt entspricht.

9. System zur Kalibrierung der Zeitverschiebung zwischen Kanälen ($V_1$, ..., $V_N$) eines Mehrkanalempfangssystems (2) für Funksignale, das eine Gruppe von Empfangskanälen ($V_1$, ..., $V_N$) für Funksignale umfasst, wobei jeder Empfangskanal eine Empfangskette ($6_1$, ..., $6_N$) umfasst, die ein elektrisches Signal am Eingang eines Analog-Digital-Wandlers ($8_1$, ..., $8_N$) mit einer zugehörigen Abtastfrequenz und ein Schnittstellenmodul ($10_1$, ..., $10_N$), das an den Ausgang des Analog-Digital-Wandlers ($8_1$, ..., $8_N$) angeschlossen und so beschaffen ist, dass es Sätze von Abtastwerten des digitalisierten Signals am Eingang eines Moduls (12) zur digitalen Signalverarbeitung mit einer oder mehreren programmierbaren digitalen Komponenten liefert,

das Kalibrierungssystem umfasst

- eine Rauschquelle (14, 29), die dazu geeignet ist, ein gleiches Zufallssignal, das ein Rauschen darstellt, auf alle Empfangskanäle ($V_1$, ...,$V_N$) zu injizieren,
- ein Berechnungsmodul (22), das geeignet ist, für mindestens ein Paar von Empfangskanälen, die einen ersten Kanal und einen zweiten Kanal umfassen, eine Zeitverschiebung zwischen digitalisierten Signalabtastwerten, die von dem ersten und dem zweiten Kanal geliefert werden, zu schätzen, indem es eine Berechnung einer Kreuzkorrelationsfunktion zwischen einem ersten Satz von Abtastwerten, die von dem ersten Empfangskanal erhalten werden, und einem zweiten Satz von Abtastwerten, die von dem zweiten Empfangskanal erhalten werden, verwendet,
- einen Speicher (20), der dazu geeignet ist, die geschätzte Zeitverschiebung in Verbindung mit dem genannten Kanalpaar zu speichern.

**10.** - System zur Synchronisation zwischen Kanälen eines Mehrkanalempfangssystems für Funksignale, wobei das Empfangssystem eine Gruppe von Kanälen zum Empfang von Funksignalen umfasst, wobei jeder Empfangskanal eine Empfangskette umfasst, die ein elektrisches Signal am Eingang eines Analog-Digital-Wandlers mit einer zugehörigen Abtastfrequenz liefert, und ein Schnittstellenmodul, das am Ausgang des Analog-Digital-Wandlers angeschlossen ist und dazu geeignet ist, Gruppen von digitalisierten Signalabtastungen am Eingang eines Moduls zur digitalen Signalverarbeitung zu liefern, das eine oder mehrere programmierbare digitale Komponenten umfasst,

das Synchronisationssystem ein Zeitverschiebungskalibrierungssystem nach Anspruch 9 umfasst, das in einer Zeitverschiebungskalibrierungsphase für mindestens ein Paar von Empfangskanälen implementiert wird, und jeder Empfangskanal ein Zeitversatz-Kompensationsmodul ($26_1$, ..., $26_N$) umfasst, das an den Ausgang eines Schnittstellenmoduls ($10_1$, ..., $10_N$) angeschlossen ist, wobei das Zeitversatz-Kompensationsmodul eines Kanals so ausgelegt ist, dass es den geschätzten Zeitversatz in Bezug auf einen Referenzkanal kompensiert, um Reihen von synchronisierten digitalen Abtastwerten am Eingang des Moduls (12) zur digitalen Signalverarbeitung zu liefern, wobei jede Reihe von synchronisierten digitalen Abtastwerten eine Anzahl von Abtastwerten umfasst, die einer gleichen Dauer entsprechen, und jeder erste Abtastwert jeder Reihe zeitlich einem gleichen Zeitpunkt entspricht.

## Claims

**1.** A method for temporal shift calibration between reception channels ($V_1$,..., $V_N$) of a multichannel radioelectric reception system (2), the system (2) including a set of radioelectric reception channels ($V_1$,..., $V_N$), each reception channel including a reception chain ($6_1$,..., $6_N$) delivering an electrical signal at the input of an analog-digital converter ($8_1$,..., $8_N$) having an associated sampling frequency, and an interfacing module ($10_1$,..., $10_N$) connected at the output of said analog-digital converter ($8_1$,..., $8_N$) and suitable for supplying sets of digitized signal samples at the input of a digital signal processing module ($12_1$,...,$12_N$) including one or several programmable digital components, the method comprising, after the reception system is powered on:

- injecting (40, 60) a same random signal, representing a noise obtained from a noise source (14, 29), on all of the reception channels,
- for at least one pair of reception channels including a first channel and a second channel, estimating (52, 76) a temporal shift between digitized signal samples supplied by said first and second channels, using a calculation of an intercorrelation function between a first set of samples obtained by the first reception channel and a second set of samples obtained by the second reception channel,
- storing (54) the estimated temporal shift in combination with said pair of channels.

**2.** The method according to claim 1, wherein said random signal representing an injected noise is a thermal analog noise injected at the input of each reception channel ($6_1$,...,$6_N$).

**3.** The method according to claim 1, wherein said random signal representing an injected noise is an analog noise obtained from a pseudorandom digital sequence and injected at the input of the analog-digital converter ($8_1$,..., $8_N$) of each reception channel ($V_1$,..., $V_N$).

**4.** The method according to any one of claims 1 to 3, wherein the estimate of said temporal shift includes a detection of a maximum of said intercorrelation function, said temporal shift being a digital temporal shift as a function of a temporal index corresponding to said maximum.

5. The method according to any one of claims 1 to 4, implemented in a multichannel reception system (2) in which each analog-digital converter ($8_1$,..., $8_N$) has a same sampling frequency ($F_e$), and wherein the calculation of an inter-correlation function includes the following steps:

- acquiring (42) a first set of samples on said first reception channel and a second set of the same number of samples on said second reception channel;
- applying (44) a discrete Fourier transform on said first set of samples, making it possible to obtain a first set of transformed complex sample values, and applying (44) a discrete Fourier transform on said second set of samples, making it possible to obtain a second set of transformed complex sample values,
- calculating (48) the complex product between the first set of complex values and the conjugate complex of the second set of complex values,
- obtaining (50) said inter-correlation function by applying an inverse discrete Fourier transform to said complex product.

6. The method according to any one of claims 1 to 4, implemented in a multichannel reception system in which each analog-digital converter ($8_1$,..., $8_N$) has an associated own sampling frequency ($Fe_1$,....,$Fe_N$), and the calculation of an inter-correlation function includes the following steps:

- acquiring (62) a first set of a first number $M_1$ of samples on said first reception channel during a predetermined duration ($T_0$), and acquiring (64) a second set of a second number $M_2$ of samples, different from the first number, on said second reception channel, during said predetermined duration,
- applying (66) a discrete Fourier transform on said first set of samples, making it possible to obtain a first set of $M_1$ transformed complex sample values, and applying (68) a discrete Fourier transform on said second set of samples, making it possible to obtain a second set of $M_2$ transformed complex sample values,
- obtaining (70) two sets of complex values with the same cardinal by eliminating complex values associated with the highest frequencies in the set with the highest cardinal,
- calculating (72) the complex product between the first set of complex values and the conjugate complex of the second set of complex values with the same cardinal,
- obtaining (74) said inter-correlation function by applying an inverse discrete Fourier transform to said product.

7. The method according to any one of claims 1 to 6, applied in a multichannel reception system comprising a number N of reception channels greater than or equal to 2, including a selection of a reference reception channel, and the estimate of the temporal shift for each pair of channels made up of said reference reception channel and a second channel from among the N-1 other reception channels.

8. A synchronization method between channels of a multichannel reception system for radioelectric signals, the system including a set of radioelectric reception channels, each reception channel including a reception chain delivering an electrical signal at the input of an analog-digital converter having an associated sampling frequency, and an interfacing module connected at the output of said analog-digital converter and suitable for supplying sets of digitized signal samples at the input of a digital signal processing module including one or several programmable digital components,

including, for at least one pair of reception channels, a temporal shift calibration phase implementing a method according to one of claims 1 to 7,
and a phase for applying a compensation of the estimated temporal shift at the output of the interfacing module of at least one of the channels of said pair of channels relative to a reference channel, so as to supply a series of synchronized digital channels at the input of the digital processing module of the signal, each series of synchronized digital channels including a number of samples corresponding to a same duration and each first sample of each series temporally corresponding to a same moment.

9. A system for temporal shift calibration between channels ($V_1$,..., $V_N$) of a multichannel radioelectric reception system (2) including a set of radioelectric reception channels ($V_1$,..., $V_N$), each reception channel including a reception chain ($6_1$,..., $6_N$) delivering an electrical signal at the input of an analog-digital converter ($8_1$,..., $8_N$) having an associated sampling frequency, and an interfacing module ($10_1$,..., $10_N$) connected at the output of said analog-digital converter ($8_1$,..., $8_N$) and suitable for supplying sets of digitized signal samples at the input of a digital signal processing module (12) including one or several programmable digital components, the calibration system comprising:

- a noise source (14, 29) suitable for injecting a same random signal representing a noise on all of the reception channels ($V_1,..., V_N$),
- a calculating module (22) suitable for estimating, for at least one pair of reception channels including a first channel and a second channel, a temporal shift between digitized signal samples supplied by said first and second channels, using a calculation of an intercorrelation function between a first set of samples obtained by the first reception channel and a second set of samples obtained by the second reception channel,
- a memory (20) suitable for storing the estimated temporal shift in combination with said pair of channels.

**10.** A synchronization system between channels of a multichannel reception system for radioelectric signals, the reception system including a set of radioelectric reception channels, each reception channel including a reception chain delivering an electrical signal at the input of an analog-digital converter having an associated sampling frequency, and an interfacing module connected at the output of said analog-digital converter and suitable for supplying sets of digitized signal samples at the input of a digital signal processing module including one or several programmable digital components,

this synchronization system including a temporal shift calibration system according to claim 9, implemented in a temporal shift calibration phase for at least one pair of reception channels, and each reception channel including a temporal shift compensation module ($26_1$, ..., $26_N$), connected at the output of a corresponding interfacing module ($10_1,..., 10_N$), the temporal shift compensation module of a channel being suitable for compensating the estimated temporal shift relative to a reference channel, so as to supply a series of synchronized digital channels at the input of the digital processing module (12) of the signal, each series of synchronized digital channels including a number of samples corresponding to a same duration and each first sample of each series temporally corresponding to a same moment.

Fig.1

EP 3 777 367 B1

Fig.2

Fig.3

-60-

62 — Acquisition $V_1$

64 — Acquisition $V_2$

66 — TFD

68 — TFD

$TFD_1$ sur $M_1$ points

$TFD_2$ sur $M_2$ points

70 — Suppression fréquences hautes

$TFD'_2$

72 — $TFD_1 *$ conj $(TFD'_2)$

74 — $TFD^{-1}$

76 — Fonction d'intercorrélation

Vers 52

*Fig.4*

$t$  $V_1$ : $M_1$ sur la durée $T_0$

$t$  $V_2$ : $M_2$ sur la durée $T_0$

*Fig.5*

```
80 ──  | Acquisition        |
       | échantillons RF    |
              │
              ▼
82 ──  | Lecture            |
       | décalage temporel  |
              │
              ▼
84 ──  | Application        |
       | décalages temporels|
```

*Fig.6*

EP 3 777 367 B1

Fig.7

*Fig.8*

Fig.9

Fig.10

*Fig.11*

*Fig.12*

*Fig.13*

```
┌──────────────────┐
│       101        │
└──────────────────┘
          │
          ▼
┌──────────────────┐
│       102        │
└──────────────────┘
          │
          ▼
┌──────────────────┐
│       104        │ ◄───┐
└──────────────────┘     │
          │              │
          ▼              │
┌──────────────────┐     │
│       106        │     │
└──────────────────┘     │
          │              │
          ▼              │
┌──────────────────┐     │
│       108        │     │
└──────────────────┘     │
          │              │
          ▼              │
┌──────────────────┐     │
│       110        │     │
└──────────────────┘     │
          │              │
          ▼              │
┌──────────────────┐     │
│       112        │     │
└──────────────────┘     │
          │              │
          ▼              │
┌──────────────────┐     │
│       114        │ ────┘
└──────────────────┘
```

*Fig.14*

**RÉFÉRENCES CITÉES DANS LA DESCRIPTION**

**Documents brevets cités dans la description**

- EP 2299774 A1

- US 2010164782 A1